# EUROPEAN PATENT APPLICATION

(11) **EP 0 865 938 A1**
(43) Date of publication of application: **23.09.1998**
(21) Application number: 96939384.2
(22) Date of filing: 12.11.1996
(51) Int. Cl.: B60B 3/04, B21D 53/26

(54) **METHOD OF PRODUCING LIGHT ALLOY WHEELS**

(30) Priority: 22.11.1995 RU 95119696
(71) Applicant: Shcherba, Valery Nikolaevich, Moscow, 117342 (RU)
(72) Inventor: Shcherba, Valery Nikolaevich, Moscow, 117342 (RU)
(74) Representative: Liebetanz, Michael, Dipl.-Phys.
(86) International application number: RU9600322
(87) International publication number: WO9718958

(57) **Abstract**

The proposed method of producing light alloy wheels involves producing the wheel rim from a shaped section obtained by extrusion of an initial blank. The section is bent into a ring and butt-welded. A wheel disc is then fitted and joined to the rim. Depending on the desired degree of homogeneity in the structure of the material and the physical and mechanical characteristics of the section, the latter is produced by extrusion of a pre-heated blank in the absence of resisting friction or in the presence of regulated compression forces in the surface layers of the article by selecting the appropriate heating regime for the article and capsule and the appropriate kinematic regime of movement of the capsule and die. In order to obtain a section with a homogeneous structure free of coarse crystalline borders and shrinkage under mechanical treatment and enhanced physical and mechanical characteristics, extruction is carried out by the method of friction-assisted extrusion. The section is bent into a wheel on section bending machines and after butt-welding the rim is corrected. The wheel disc is produced by casting or stamping from a solid or sheet blank. The disc and rim are fitted together by pressing and subsequent welding.

## Description

### Technical field

This invention relates to mechanical engineering, specifically - a method of manufacturing light alloy wheels. It can be used for the production of wheels for vehicles.

### Prior art

Light alloy wheels are conventionally manufactured by casting (H.J. Bobmeyer, "The aluminium wheel in its various versions", Aluminium + Automobile: Lect. Inter. Symposium, Düsseldorf, 1980, P. 18/1, Düsseldorf, AKU.-Verl., 1981) that includes the following operations: preparation and treatment of molten alloy, making a casting, quality control of that casting, thermal treatment, machining, galvanic treatment, painting, quality inspection and packing of the wheel.

At the moment the most commonly encountered method of making wheels is low pressure die casting. This process provides the highest strength of wheels but is labor-consuming. In many respects the quality of castings depends on the process of preparing the molten alloy. Before casting, the molten alloy is carefully ridded of occluded gas and nonmetallic inclusions by vacuum processing or by treating with a dispersing gas jet (argon or dried nitrogen). The ingress of nonmetallic inclusions into the casting is prevented by coarse and fine cleaning of the molten alloy with the help of fiber-glass-fabric filters and/or ceramic foam filters. For detection of cavities and cracks, especially in the tubeless variety, the wheel is subjected to X-ray examination. Nevertheless, casting rejects reach a level of 15% because of their porosity. The cost of wheels manufactured by this method is 3-4 times higher than in the case of steel wheels.

There is a well-known method of manufacturing light alloy wheels (US, No. 4 048 828) that makes it possible to improve the quality of wheels through the use of split-die forging. The advantages of die forging lie in the possibility of matching the direction of metal grain with the direction of the main load; this ensures an elevation of the metal fatigue limit and, consequently, the strength of the wheel. From the direction and value of the load, it is possible to establish an optimal relationship between the thickness of the rim and that of the disk, permitting a decrease in the weight of such a wheel in comparison to that of a cast one. By this process however up to 60% of the initial material is wasted.

There is a well-known method of manufacturing light alloy wheels (W. Spath, "Felgenfertigung aus Aluminium - Strangpressprofilen", Automobiltechnische Zeitschrift, 1986, Vol. 88, No. 10, p.p. 557-565) by which a billet is first forged on a hydraulic closed-die forging press in two operations and then the rim is rolled out. Although this method incorporates less metal waste and produces wheels of good quality, its higher production costs have prevented its wider use.

There is a well-known method of manufacturing light alloy wheels out of strip materials (S. Fujiwara, N. Aoki, T. Iwamoto et al, "The development of a two piece aluminium disc wheel for automobiles", Keykindzoku Nihon, 1984, Vol. 34). The initial material for making rims is either a coiled band or a strip that is cut into measured workpieces on a straightening-and-cutting machine. The workpiece is rolled into a ring on a circular-bending machine and butt-welded by the resistance-arc process. Then the burs are removed and the seam is cold-hardened by pressure. Shaping the rims is accomplished on forming machines in four deformination stages; this is followed by a dressing process to correct geometrical distortions of the rim. In specific cases the shaping is done in one operation of expanding and dressing on presses or squeezing machines.

The disk of the wheel is shaped out of a round workpiece on presses in several operations depending on selected design. Then the disk and rim are argon-arc welded around the inner surface of the rim.

This method of making wheels is characterized by high output, low production costs and relatively low labor intensity. A drawback of this method is its limited potential for the styling of wheels in comparison to the casting method.

There is also a known method of manufacturing rims out of light alloy extruded sections (FR, No. 2 620 060, 1987).

Bending of an extruded section with a ridge into a rim is carried out on a special-purpose machine. During bending the ridge is formed into a circular seat for mounting the disk. The section is then butt-welded. The disk is made by casting or die pressing and is fastened to the rim by nuts and bolts, the number of which varies with dimensions of the rim. Under this method the rim made out of an extruded section is distinguished by its minimum weight and better strength. Because there is no need for machining, the manufacture of the rim is less labor consuming. However, the production of wheels imposes strict requirements on the metal structure quality of the extruded section. Traditional methods of extruding alloys of the AlMgSil type, hardenable by heat treatment, are marked by the formation of a coarse-crystalline contour, the surface of which has a reduced corrosive resistance. In addition, the metal has residual stresses which is undesirable for wheel rims. The use of a section extruded by traditional methods requires additional operations, such as heat treatment, straightening or precision-drawing to relieve residual stresses. A drop in corrosive resistance necessitates additional expenses to protect rim surfaces with special coatings.

### Disclosure of the invention

The goal of this invention is to provide such a method of producing light alloy wheels which due to a rational use of initial semiproducts would substantially improve the production rate and quality of wheels, while decreasing the metal waste.

This goal is achieved by means of a method of light alloy wheel production which includes: manufacturing a wheel rim out of a section obtained through extrusion of an initial billet by bending this section into a ring and butt-welding; manufacturing a wheel disk, fitting and joining this disk to the rim, which, depending on the desired degree of homogeneity in the structure of the material and on the physical and mechanical characteristics of the section, is produced by extrusion of a preheated billet in the absence of resisting action of friction forces or in the presence of regulated compression forces in the surface layers of the billet using preselected heating conditions for the billet and for the extruder's container, as well as kinematic conditions of the movements of the container and ram; the section is bent into a ring on section-bending machines and after butt-welding the rim is subjected to expansion; the disk is produced by casting or die pressing out of a cylindrical or plate blank, and the disk and rim are fitted together by pressing and subsequent welding.

Preventing the occurance of a coarse-crystalline contour in the surface layers creates the opportunity to produce a wheel with a minimum weight, increased corrosive resistance and better styling. This method is noted for a high production rate.

In order to extrude a section with a homogeneous structure and minimum coarse-crystalline contour that defines the thickness of the to-be stock machined from the inner surface of the rim with allowance made for the change of the section's sizes in the process of bending and expanding, the billet is taken not longer than two diameters, the billet and container are heated to within (0,8-0,95) and (0,8-0,9), respectively, of the upper temperature limit on the range of metal ductility. The extrusion is performed by either the direct or indirect method, with the speed equal to within (0,3-0,5) of the limiting value determined by the necessity to preserve the continuity of the section. During direct extrusion special lubricants are commonly used.

Thus, the above defined conditions make it possible to obtain extruded sections for making wheels with a coarse-crystalline contour of the smallest size achievable by these two extrusion methods, thereby reducing the machining of the wheel to a minimum and, in addition, making it possible to raise the strength of the wheel in comparison with the use of well-established extrusion operating conditions.

The production of an extruded section with no coarse-crystalline contour on the inside of the rim and with no stock for machining is carried out by either the direct or indirect method without the use of special lubricants under isothermic operating conditions, with preheating the container and billet to withing (0,9-0,95 of the upper temperature limit on the range of metal ductility, with the speed equal to within (0,2-0,3) of the limiting value determined by the necessity to preserve the continuity of the section, through a two channel die with the channels placed opposite each other and with the section's surfaces, which will be serving as the inner surface of each rim, facing the longitudinal axis of the die.

It gives an opportunity to produce an extruded section by well-established methods on direct and indirect extruders without subsequent machining the rim because in the course of extrusion no coarse-crystalline contour forms on what will be the inner surface of the rim; this contour forms only on the surface that subsequently will be under the wheel tyre, protecting the rim against corrosion.

Obtaining a homogeneous structure of a section without any coarse-crystalline contour and stock for machining and with enhanced strength and plastic properties is carried out by preheating the billet and container to within (0,75-0,9) of the upper temperature limit on the range of metal ductility, with the section being extruded by the high-speed extrusion method "SPAT" (known in the West under the name of "Friction Assisted Extrusion") in conditions of active action of friction forces with the speed equal to within (0,3-0,6) of the limiting value determined by the necessity to preserve the continuity of the section. As it takes place, the ratio between the container speed an that of the ram is maintained in the range from 1,1 to 1,4.

With this opportunity to enhance the strength and plastic properties of the extruded section, it is subsequently possible to bend it into a rim using a smaller number of technological operations and to eliminate completely machining the rim.

The configuration and dimensions of the section's part that forms the outer surface of the rim are set in full compliance with this outer surface; whereas the configuration and dimensions of the section's part forming the inner surface of the rim are corrected with allowance made for the change of section dimensions which occurs during the process of bending and expanding, as well as for the probable subsequent machining of the inner surface of the rim. When determining the configuration and dimensions of the section, it should be taken into account that the configuration and dimensions of the rim's outer surface must satisfy the requirements of the national and international standards, while the configuration and dimensions of the inner surface have to be determined with consideration for the binding, shrinkage, change of temperature conditions when heating and cooling the rim's material, as well as for the probable machining of it.

This gives an opportunity to optimize the wheel's weight and raise the strength of some of its elements.

Bending the extruded section is carried out in one operation after the prior turning in the ends without preheating the billet.

It gives an opportunity to cut down the number of bending operations and production costs.

Bending the section, the material of which has a moderate resource of ductility, is carried out in several operations with intermediate annealings or in one operation in a heated state.

This makes it possible to improve the quality of the rim.

The section bent into a rim is subjected to etching, washing, drying and then butt-welding, with the butt joint placed at a right or acute angle to the side flange of the extrudate, while the section's length is made equal to within (0,97-0,99) of the designed value in order to take into account the consequent trueing of the rim by expanding.

This furnishes an opportunity to enhance the quality of the weld and reliability of the wheel's structure.

The section bent into a rim is arc-butt-welded.

This assures a better quality of the rim's weld.

Trueing the welded rim is done by expanding, swaging in split dies, rubber-, water-, or polyurethane-squeezing, or by a combination of these techniques. This ensures the production of a high-performance wheel in accordance with national and international standards.

Trueing the welded rim is also done by heating it to the upper temperature limit on the range of metal ductility and then mounting it on a split arbor for subsequent cooling to the ambient temperature.

This increases the production rate of the process and improves the quality of the product in comparison with well-established methods.

The wheel disk is made by die pressing a cast blank, by low pressure die casting, or by counterpressure die casting. The mounting surface of the disk is machined and then the disk is pressed into the rim and welded to it.

This widens the assortment of wheels, extends potentialities for their styling and reduces the manufacturing costs.

The wheel disk is also made by die pressing an extruded workpiece simultaneously with joining the disk to the rim in split dies, and welding the disk to the rim is carried out by either pressure or arc process around the inner surface of the rim.

It further decreases the metal waste.

The wheel disk is also made of a rod blank by die pressing in split dies simultaneously with joining the disk to the rim, and welding the disk to the rim is carried out by pressure in neutral gas media at heating temperature close to the upper limit on technologically feasible temperatures range; in this case the rim can be used with technological ridges and grooves on the inside.

This makes it possible to additionally enhance the strength of the wheel and to provide conditions for accomplishing the pressure welding.

### The best variant of implementation of the invention

The method being claimed for manufacturing light alloy wheels is realized in the following way.

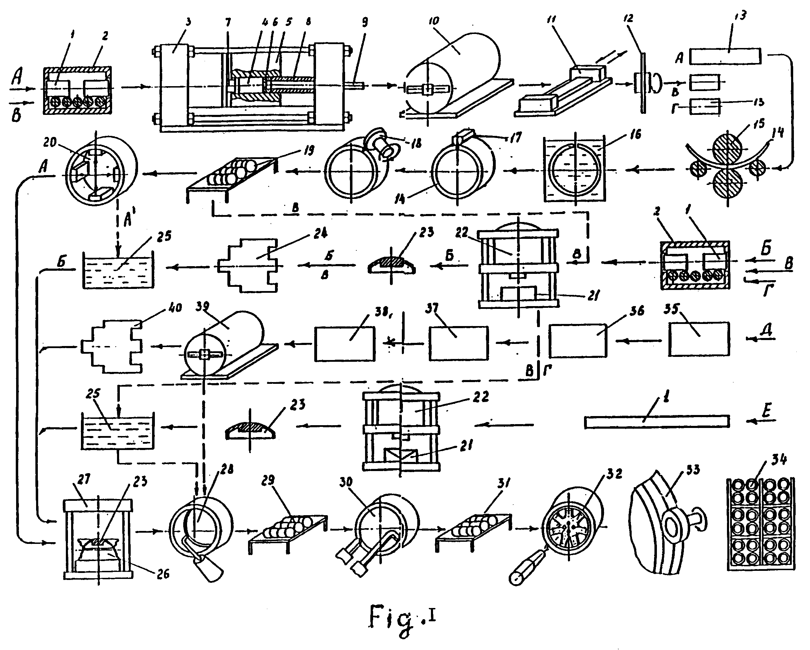

A solid billet (1) (Fig. 1) to be extruded for obtaining a rim section is preheated. The preheating is carried out, for example, in induction or resistance furnaces (2). The temperature range of preheating the billet is chosen depending on the alloy type.

For example, preheating the billet from hard-deformable aluminum alloys is carried out within the range 320-480°C depending on the alloy type, press type, requirements imposed on physical and mechanical properties of the product, as well as on the extrusion speed.

Heating the billet before extrusion makes it possible to reduce the power of consumption by the extrusion press. Moreover, during the process of metal forming of those alloys which manifest the extrusion effect (effect of metal structural strengthening), the preheating of the billet makes it possible to improve mechanical properties of the product.

After preheating, the billet (1) is fed to the extruder (3) (Fig. 1, as indicated by arrow A) an then pushed into the space (4) of the liner (5) of the container of the extruder (3). To reduce the energy expenditure for extrusion of the section, it is advisable to preheat the container (5), die (6) and ram (7) before starting the metal-forming. The preheating temperature depends on the material of the extruded billet and on the prescribed physical and mechanical properties of the extruded section. For example, when extruding hard-deformable alloys this temperature ranges from 320°C to 420°C. Then follows the extrusion process under the conditions providing the best compromise between strength and plastic properties which results in either the elimination or limitation of the formation of the coarse-crystalline contour. For example, when producing a section under the high-speed friction-assisted extrusion ("SPAT"), the container (5) and ram (7) are moved simultaneously in the direction of the die (6) mounted on a long ram (8); in this case the speed of the container (5) is chosen higher than that of the ram (7).

When using such kinematic conditions, friction forces, directed to the metal outflow, occur on the side surface of the billet which provides the creation of compressing stresses close to the contact surface between the billet and container. Under these conditions an increase in speed of the peripheral metal flow and a decrease in speed of the axial layer takes place. That substantially changes the pattern of metal flow in compressing part of the plasticity zone and creates conditions for homogenizing the metal structure throughout the volume of the extruded section, as well as for raising its corrosive resistance.

Upon completion of extrusion, the finished extruded section (9) is separated from the discard in the conventional way. Then the section is subjected to preheating for a thermal treatment in a furnace (10), to subsequent straightening on a stretching machine or roller straightening machine (11) and to cutting (12) into workpieces (13) of measured length. When preparing the edges of the joint, use can be made of both straight cutting and profiled cutting; the latter, when bending the section workpiece into a ring, makes it possible to obtain a straight butt-joint.

The length of the measured section workpiece is chosen equal to within (0,97-0,99) of the designed value which makes it possible later on to carry out the dressing of the rim by expanding.

Bending the extruded section into the rim (14) is carried out on a section-bending machine (15) or bending press in a special die. The joint is then prepared for welding by shaping, if necessary, the ends of the bent section and by positioning them for subsequent welding on a welding machine. The ends of the joint can be butted together at either a right or acute angle to the side flange of the extruded section.

Depending on the type of the alloy used, before welding the rim is subjected to etching in alkali or acid on a special unit (16), and then to washing and drying. Next, flash welding of the rim's butt joint is carried out on a welding machine by an argon-arc or resistance-arc process, providing for a number of alloys the weld strength of not less than 90% of the strength of the section's material.

After trimming the welding seam (18) and examining its quality, the welded rim (14) is subjected to trueing by expansion on, for example, special expanding machines (20) or presses (22) in split dies. The disk (23) is then pressed into the rim (14) simultaneously with the trueing of the wheel assembly. By expanding the rim, its rectilinear parts proximal to the joint and its out-of roundness are eliminated.

The use of the measure length, equal to within (0,97-0,99) of the designed value, is determined by the requirements for trueing hollow articles by expanding. A length of the section less than the one mentioned above can result in the occurrence of an out-of-roundness of the rim and in the deterioration of plastic characteristics of the material being deformed. A length of the section greater than the one mentioned above can result in poor trueing without elimination of the out-of-roundness.

The wheel disk (23) is made by pressing a cast blank in closed dies in which the prescribed disk's geometry is achieved and the spaces between wheel spokes are formed (Fig. 1, as indicated by arrow B). After die pressing, the disk is subjected to machining of its mounting surfaces with the simultaneous removal of inter-spoke webs. Etching of the disk is then carried out on a special unit (25).

Next, the pressing of the disk (23) into the rim (14) is carried out on a unit (27), followed by the etching on a special unit (25), welding (28) of the rim (14) to the disk (23), examination of weld quality (29), finish-machining of the wheel assembly (30), examination of quality (31), painting of the wheel (32), carrying out final tests (33) and packaging (34). As a variant, a wheel disk (23) can be made by hot forming of a preextruded section at the instant of assembling this section and the rim together as a wheel in split dies (21), with subsequent trueing by expansion and then welding the disk to the rim.

Forming a preextruded section (the sequence of operations is shown in Fig. 1, as indicated by arrow C) provides a means for a substantial extension of potential for wheel designing through the use of multiple-unit dies. In this case the disk's design is determined only by the multiple-unit die and the die configuration. Through the use of an extruded section it is possible to bring its volume close to the volume of the formed disk, thereby cutting down on the waste of metal otherwise used for incorporating the webs, to eliminate the dead metal zones and to get throughout the disk's volume an evenly deformed metal structure with the prescribed level of physical and mechanical properties.

The wheel disk can be produced by low pressure die casting from molten alloy (35) or by counterpressure die casting. Such a method makes it possible to extend the possibilities for wheel designing by using shaped castings.

As a variant, the disk can be made by the pressing of a rod blank in split dies with simultaneous welding to the rim in non-oxidizing media and at elevated temperatures of the rim and disk, close to the upper limit on technologically feasible temperature range.

The disk can also be made by the sheet-metal forming of a bar blank in several consecutive forming operations. This solution makes it possible to reduce the wheels weight and to cut down on the metal waste.

Thus, the claimed method of producing light alloy wheels makes it possible to achieve with maximum efficiency top-quality wheels, which have improved physical and mechanical properties and are lighter than die-pressed or cast wheels by 20 and 40%, respectively.

By reducing the tensile stresses of metal near the die ring during extrusion of the rim section, the claimed method makes it possible to get sections with prescribed physical and mechanical properties, as well as an excellent corrosive resistance. That, in turn, reduces the weight of the wheel and improves its performance characteristics to a level unsurpassable by any other known production method.

By choosing optimal temperature and speed, as well as kinematic conditions for friction-assisted extrusion, it is possible to get enhanced mechanical properties along the length and across the section of the extruded product in the absence of structural nonuniformity in the form, for example, of a coarse-crystalline contour, which is difficult to realize by any other extrusion method. By changing the structure with an enhanced level of plasticity and a nonrecrystallized one with an enhanced level of strength properties in accordance with requirements imposed by the performance conditions of the wheels.

Moreover, due to the use of multiple-unit dies to produce a workpiece from an extruded section for the subsequent metal forming of the disk, the claimed method makes it possible to change from one type of wheel to another.

## Claims

1. A method of producing a light alloy wheel consisting of making a wheel rim out of a section obtained through extrusion of an initial billet by bending this section into a ring and butt-welding, of making a wheel disk which is then fitted and joined to the rim; this method being characterized by the fact that, depending on the prescribed levels of metal structure homogeneity and physical and mechanical properties of the section the latter is manufactured by extrusion of a preheated billet in the absence of resisting action of friction forces or in the presence of regulated compression forces in the surface layers using preselected heating conditions for the billet and for the extruder's container, as well as kinematic conditions of the movements of the container and ram; the section is bent into a ring on section-bending machines and after butt-welding the produced rim is subjected to expansion; the disk is produced by die casting or die-forming out of a cylindrical or plate blank, while the disk and rim are fitted together by pressing and subsequent welding.

2. A method according to Claim 1, characterized by the fact that, in order to get an extruded section with a homogeneous structure and minimum thickness of the coarse-crystalline contour that determines the stock for machining the inner surface of the rim with additional allowance made for the change of section's sizes in the process of bending and expanding, the billet for extrusion is taken not longer than two diameters, the billet and container are heated to within (0,8-0,95) and (0,8-0,9), respectively, of the upper temperature limit on the range of metal ductility, and the extrusion is performed by direct or indirect method, with the speed equal to within (0,3-0,5) of the limiting value determined by the necessity to preserve the continuity of the section, and under direct extrusion special lubricants are commonly used.

3. A method according to Claim 1, characterized by the fact that manufacturing an extrusion section with a homogeneous structure and without a coarse-crystalline contour on the inner surface of the rim and without a stock for machining is carried out by direct or indirect method without the use of special lubricants under isothermic operating conditions, with preheating the container and billet up to within (0,9-0,95) of the upper temperature limit on the range of metal ductility, with the speed equal to within (0,2-0,3) of the limiting value determined by the necessity to preserve the continuity of the section, through a two channel die with the channels placed opposite each other and with the section's surfaces, which will be serving as the inner surface of each rim, facing the longitudinal axis of the die.

4. A method according to Claim 1, characterized by the fact that, in order to manufacture a section with a homogeneous structure and with enhanced level of physical and mechanical properties, without any coarse-crystalline contour and without stock for machining, the billet and container are preheated to within (0,75-0,9) of the upper temperature limit on the range of metal ductility, and the extrusion is carried out under conditions of assistance of friction forces by the "SPAT" method with the speed equal to within (0,3-0,6) of the limiting value determined by the necessity to preserve the continuity of the section, the ratio between the container speed an that of the ram being maintained in the range from 1,1 to 1,4.

5. A method according to any of Claims 1, 2, 3, 4, characterized by the fact that configuration and dimensions of the section's part forming the outer surface of the rim are set in full compliance with this outer surface, and the configuration and dimensions of the section's part forming the inner surface of the rim are corrected with allowance made for the change of section dimensions which occurs during the bending and expanding, as well as the probable subsequent machining of the inner surface of the rim.

6. A method according to Claims 1, 5, characterized by the fact that bending the extruded section is carried out after prior turning in its ends, in one operation, without preheating the billet.

7. A method according to Claim 1, 5, characterized by the fact that bending the section, the material of which has a moderate resource of ductility, is carried out in several operations with intermediate annealings or in one operation in a heated state.

8. A method according to any of Claims 1, 2, 3, 4, characterized by the fact that the section bent into a rim is subjected to etching, washing, drying and then butt-welding, with the butt joint placed at a right or acute angle to the side flange of the extrudate, while the section's length is made equal to within (0,97-0,99) of the designed value in order to take into account the consequent trueing of the rim by expanding.

9. A method according to Claim 1, 6, characterized by the fact that the extruded section bent into a rim is resistance-butt-welded.

10. A method according to Claims 1, 6, characterized by the fact that trueing the welded rim is done by expanding or swaging in split dies, or rubber-, or polyurethane-squeezing.

11. A method according to Claims 1, 6, characterized by the fact that trueing the welded rim is done by heating it to the upper temperature limit on the range of metal ductility and then mounting it on a split arbor for subsequent cooling to the ambient temperature.

12. A method according to any of Claims 1, 2, 3, 4, characterized by the fact that the wheel disk is made by die-forming a cast blank or by casting with the mounting surface of the disk being subsequently machined and then the disk being pressed into the rim and welded to it around the inner surface of the rim.

13. A method according to any of Claims 1, 2, 3, 4, characterized by the fact that the wheel disk is made by die-forming an extruded workpiece simultaneously with joining the disk to the rim in split dies, and welding the disk to the rim is carried out by pressure or arc process around the inner surface of the rim.

14. A method according to any of Claims 1, 2, 3, 4, characterized by the fact that the wheel disk is made out of a rod blank by die-forming in split dies simultaneously with joining the disk to the rim, and welding the disk to the rim is carried out by pressure in neutral-gas media at heating temperatures close to the upper limit on the range of metal ductility; in this case the rim can be used with technological ridges and grooves on the inside.
